# EUROPÄISCHE PATENTSCHRIFT

(11) **EP 3 035 520 B1**
(45) Veröffentlichungstag und Bekanntmachung des Hinweises auf die Patenterteilung: **09.01.2019**
(21) Anmeldenummer: 15196415.2
(22) Anmeldetag: 26.11.2015
(51) Int. Cl.: H02N 2/04, F02M 51/06, F02M 47/02, F02M 61/16

(54) **HYDRAULISCHE KOPPLEREINHEIT ZUR STEUERUNG EINES VENTILS**
HYDRAULIC COUPLER UNIT FOR CONTROLLING A VALVE
UNITÉ DE COUPLAGE HYDRAULIQUE DESTINÉE À COMMANDER UNE SOUPAPE

(30) Priorität: 19.12.2014 DE 102014226673
(43) Veröffentlichungstag der Anmeldung: 22.06.2016
(73) Patentinhaber: ROBERT BOSCH GMBH, 70442 Stuttgart (DE)
(72) Erfinder: Stoecklein, Wolfgang, 71332 Waiblingen (DE); Kreschel, Henning, 71640 Ludwigsburg (DE); Rapp, Holger, 71254 Ditzingen (DE); Junger, Dieter, 70374 Stuttgart (DE)

(56) Entgegenhaltungen:
- EP-A1- 2 218 906
- WO-A1-2010/142767
- DE-A1- 10 233 907
- DE-A1-102010 031 497

## Beschreibung

Die Erfindung betrifft eine hydraulische Kopplereinheit zur Steuerung eines Ventils, insbesondere zur Steuerung eines Steuerventils eines Kraftstoffinjektors.

### Stand der Technik

Hydraulische Kopplereinheiten in einem Kraftstoffinjektor sind aus dem Stand der Technik bekannt, beispielsweise aus der Patentschrift EP 2 388 467 B1. Der bekannte Kraftstoffinjektor weist ein Aktorelement und eine hydraulische Kopplereinheit auf. Die Kopplereinheit übersetzt eine Bewegung des Aktorelements in eine Bewegung eines Ventilbolzens und umfasst einen längsbeweglichen Kopplerkolben, einen längsbeweglichen Ventilkolben und ein Kopplergehäuse. In dem Kopplergehäuse ist eine Gehäusebohrung ausgebildet, in der der Ventilkolben längsbeweglich geführt ist. Zwischen dem Kopplerkolben und dem Ventilkolben ist ein Druckraum als Kopplerspaltvolumen ausgebildet, wobei der Druckraum mit Kraftstoff gefüllt ist, um eine Längsbewegung des Kopplerkolbens in eine Längsbewegung des Ventilkolbens umzusetzen. Eine weitere hydraulische Kopplereinheit ist bekannt aus der EP2218906 A1.

Die Kraftübertragung zwischen Aktorelement und Kopplereinheit erfolgt zwar überwiegend in Längsrichtung, aufgrund von Toleranzen, Druckpeaks und dynamischen Prozessen kann es jedoch auch zur Einleitung von Querkräften durch das Aktorelement in den Kopplerkolben kommen. Werden diese Querkräfte durch Querkräfte am Ventilkolben kompensiert, so bewirken diese Querkräfte mechanische Reibung zwischen dem Kopplergehäuse und dem Ventilkolben bzw. zwischen dem Kopplerkolben und dem Ventilkolben. Dadurch kann es zum einen zu Verschleiß an diesen Bauteilen kommen. Durch Quer- und Reibkräfte am Ventilkolben wird zudem die Funktionsfähigkeit der hydraulischen Kopplereinheit beeinträchtigt.

### Offenbarung der Erfindung

Die erfindungsgemäße Kopplereinheit, vorzugsweise zum Steuern eines Steuerventils für einen Kraftstoffinjektor zum Einspritzen von Kraftstoff in den Brennraum einer Brennkraftmaschine, minimiert den Verschleiß am Kopplergehäuse und vor allem am Ventilkolben. Dadurch werden die Zuverlässigkeit und die Lebensdauer der hydraulischen Kopplereinheit und mit ihr auch des gesamten Kraftstoffinjektors erhöht.

Dazu ist die hydraulische Kopplereinheit gemäß Anspruch 1 ausgeführt.

Durch die Führungen des Ventilkolbens im Kopplerkolben, bevorzugt ausschließlich im Kopplerkolben, werden Querkräfte auf den Ventilkolben innerhalb der Kopplereinheit minimiert bzw. verhindert. Insbesondere die Querkräfte, die gegebenenfalls vom Aktor in den Kopplerkolben eingeleitet werden, werden durch Querkräfte zwischen Kopplergehäuse und Kopplerkolben kompensiert und bewirken keinerlei Querkräfte auf den Ventilkolben. Dies ist sehr vorteilhaft, da der Kopplerkolben im Betrieb durch die hohe Kraft des Aktorelements in Längsrichtung bewegt wird. Auf Grund der hohen hierfür zur Verfügung stehenden Kräfte ist dieser Bewegungsablauf sehr unempfindlich gegen Quer- und Reibkräfte, die auf den Kopplerkolben wirken. Der Ventilkolben wird dagegen nach dem Schließen des Ventilbolzens nur durch relativ geringe hydraulische Kräfte bewegt bzw. in Position gehalten. Daher ist die Bewegung des Ventilkolbens bei geschlossenem Steuerventil und insbesondere beim Wiederbefüllen des Druckraums sehr sensitiv gegenüber Quer- und Reibkräften, die auf den Ventilkolben wirken.

In vorteilhaften Weiterbildungen ist der Kopplerkolben weiterhin im oder am Kopplergehäuse längsbeweglich geführt, so dass bei maximaler Verkippung des Ventilkolbens in der Kolbenbohrung und gleichzeitiger und gleichsinniger maximaler Verkippung des Kopplerkolbens gegenüber dem Kopplergehäuse der Ventilkolben und das Kopplergehäuse einander nicht berühren. Dadurch wird Verschleiß zwischen dem Kopplergehäuse und dem Ventilkolben gänzlich verhindert.

Der Führungsspalt zwischen Kopplerkolben bzw. Kolbenbohrung und Ventilkolben dient gleichzeitig der Abdichtung des Druckraums gegen den Kraftstoff, der die hydraulische Kopplereinheit umgibt, wobei langsame Längenänderungen des Aktorelements und der weiteren Bauteile durch geringe Leckageströme über diesen Führungsspalt ausgeglichen werden.

Die Kolbenbohrung ist vorteilhafterweise als Sacklochbohrung ausgeführt, wobei in ihr der Ventilkolben aufgenommen ist. Dadurch ist der Ventilkolben längsbeweglich im Kopplerkolben geführt bzw. radial zum Kopplerkolben geführt.

Der Kopplerkolben und damit auch die Baugruppe aus Kopplerkolben und Ventilkolben ist wiederum am Kopplergehäuse axial verschiebbar geführt. Dieser Führung fällt die Aufgabe einer mechanischen Führung des Kopplerkolbens und damit auch der Baugruppe aus Kopplerkolben und Ventilkolben zu.

In Weiterbildungen der Erfindung ist auf beiden Seiten der Führung des Kopplerkolbens am oder im Kopplergehäuse zu einem Niederdruckraum des Injektors gehörender Kraftstoff vorhanden, so dass an der Führung keine Druckdifferenz anliegt, gegen die ein mit Kraftstoff gefüllter Raum abgedichtet werden müsste.

In verschiedenen Weiterbildungen kann die Führung des Kopplerkolbens am oder im Kopplergehäuse durch eine Innenbohrung im Kopplergehäuse, in der der Kopplerkolben mit einer äußeren Zylindermantelfläche aufgenommen ist, realisiert sein. Umgekehrt kann diese Führung auch durch eine innere Zylindermantelfläche am Kopplerkolben, der auf einer äußeren Zylindermantelfläche am Kopplergehäuse geführt ist, realisiert sein. In beiden Fällen ist es auch möglich, dass zur einfacheren Herstellung der Führung eine Hülse mit im wesentlichen ringförmigem Querschnitt verwendet wird, die fest mit dem Kopplergehäuse oder fest mit dem Kopplerkolben gefügt sein kann und aus funktionaler Sicht so Teil eines dieser beiden Bauelemente sein kann.

Vorteilhafterweise sind unterhalb der Führung des Ventilkolbens im Kopplerkolben bzw. in der Kolbenbohrung der Ventilkolben und das Kopplergehäuse derart gestaltet, dass der Ventilkolben im Betrieb keinesfalls das Kopplergehäuse berührt. Dies kann dadurch realisiert sein, dass der Ventilkolben unterhalb seiner Führung im Kopplerkolben durch die Gehäusebohrung des Kopplergehäuses durchtritt, wobei der Durchmesser der Gehäusebohrung um so viel größer ist als der Außendurchmesser des Ventilkolbens, dass über den kompletten Umfang stets ein Abstand zwischen der äußeren Mantelfläche des Ventilkolbens und der inneren Mantelfläche der Gehäusebohrung besteht. Es ist aber auch möglich, dass die Führung des Kopplerkolbens im oder am Kopplergehäuse axial auf gleicher Höhe oder über der Führung des Ventilkolbens im Kopplerkolben liegt. Vorzugsweise ist der Ventilkolben ausschließlich im Kopplerkolben geführt und nicht im oder am Kopplergehäuse.

In vorteilhaften Ausführungen ist das Aktorelement ein piezoelektrisches Aktorelement. Eine derartige Kopplereinheit, auch mit dem Übersetzungsverhältnis von 1:1, ist besonders wirkungsvoll für einen piezoelektrischen Aktor. Piezoelektrische Aktoren zeichnen sich durch sehr hohe Schaltgeschwindigkeiten aus und können demzufolge beispielsweise besonders vorteilhafte Einspritzverläufe und eine hohe Zumessgenauigkeit eines Kraftstoffinjektors erzielen.

Erfindungsgemäß umfasst die Führung des Kopplerkolbens im oder am Kopplergehäuse eine Führungshülse. Die Führungshülse ist den Kopplerkolben und das Kopplergehäuse zumindest teilweise radial umgebend angeordnet. Die Führungshülse ist günstig zu fertigen und einfach zu montieren. Die Führungshülse kann in weiteren Ausführungen sehr steif ausgeführt sein und dadurch auch vergleichsweise große Querkräfte zwischen Kopplerkolben und Kopplergehäuse übertragen.

Nicht erfindungsgemäß ist die Führungshülse mit dem Kopplerkolben gefügt, beispielsweise auf ihn gepresst. Die Führungshülse kann beispielsweise auf einer Außenfläche des Kopplerkolbens gefügt sein. Weiterhin wird die Führungshülse am oder im Kopplergehäuse geführt, beispielsweise über eine Außenfläche des Kopplergehäuses. Der Kopplerkolben mit der Führungshülse ist dadurch einfach zu fertigen.

Nicht erfindungsgemäß ist die Führungshülse mit dem Kopplergehäuse gefügt, beispielsweise auf einer Außenfläche des Kopplergehäuses. Weiterhin führt die Führungshülse den Kopplerkolben, beispielsweise über eine Außenfläche des Kopplerkolbens. Das Kopplergehäuse mit der Führungshülse ist dadurch einfach zu fertigen. Zudem wird dadurch die bewegte Masse der Kopplereinheit reduziert, da die Führungshülse fest mit dem ortsfesten Kopplergehäuse verbunden, beispielsweise auf dieses aufgepresst ist.

Vorteilhafterweise weist der Kopplerkolben einen verjüngten Endbereich auf, und die Außenfläche des Kopplerkolbens ist an dem Endbereich ausgebildet. Durch den verjüngten Endbereich kann die Führungshülse bauraumsparend angeordnet werden. Je nach Ausbildungsform ist die Führungshülse dabei entweder an der Außenfläche des Kopplerkolbens gefügt, oder führt den Kopplerkolben, wenn sie mit dem Kopplergehäuse fest verbunden ist.

In einer vorteilhaften Ausführung weist das Kopplergehäuse einen verjüngten Endbereich auf, und die Außenfläche des Kopplergehäuses ist an dem Endbereich ausgebildet. Dadurch kann die Führungshülse bauraumsparend zum Kopplergehäuse angeordnet werden. Nicht erfindungsgemäß ist die Führungshülse dabei entweder an der Außenfläche des Kopplergehäuses gefügt, oder wird von dem Kopplergehäuse geführt, wenn sie mit dem Kopplerkolben fest verbunden ist.

In vorteilhaften Ausführungen weisen sowohl der Kopplerkolben als auch das Kopplergehäuse jeweils einen verjüngten Endbereich auf, wobei sich beide Endbereiche gegenüberliegen. Nicht erfindungsgemäß ist die Führungshülse auf einem der Endbereiche gefügt, also fest mit diesem verbunden, und bildet mit dem anderen Endbereich die Führung aus.

Nicht erfindungsgemäß umfasst die Führung einen hülsenförmigen Fortsatz des Kopplerkolbens, wobei der Fortsatz über eine Innenfläche oder eine Mantelfläche des Kopplergehäuses geführt wird. Nicht erfindungsgemäß, wird anstelle einer Führungshülse der Fortsatz des Kopplerkolbens zur Führung durch das Kopplergehäuse verwendet. Nicht erfindungsgemäß sind Führungshülse und Kopplerkolben quasi einstückig ausgebildet. Dies ist eine nicht erfindungsgemäße, bauteilsparende Anordnung.

Nicht erfindungsgemäß umfasst die Führung einen hülsenförmigen Fortsatz des Kopplergehäuses, wobei der Fortsatz eine Außenfläche oder eine Innenfläche des Kopplerkolbens führt. Nicht erfindungsgemäß wird anstelle einer Führungshülse der Fortsatz des Kopplergehäuses zur Führung des Kopplerkolbens verwendet. Dies ist eine nicht erfindungsgemäße, bauteilsparende Anordnung, wobei gleichzeitig die bewegte Masse der Kopplereinheit reduziert ist.

In vorteilhaften Ausführungen ist die Kolbenbohrung als Sacklochbohrung ausgebildet. Dadurch ist der Druckraum nur über den Führungsspalt zwischen Kolbenbohrung und Ventilkolben befüll- bzw. entleerbar. Während der hydraulischen Übersetzung der Längsbewegung des Kopplerkolbens in die Längsbewegung des Ventilkolbens kommt es so zu einer nur sehr geringen Leckage von Kraftstoff aus dem Druckraum.

In vorteilhaften Ausführungen sind die Gehäusebohrung und die Kolbenbohrung zylindrisch ausgeführt, und die Gehäusebohrung weist einen größeren Durchmesser auf als die Kolbenbohrung, vorzugsweise einen um mindestens 5 µm größeren Durchmesser. Der Durchmesserunterschied kann aber auch noch wesentlich größer sein. Damit ist der Spalt zwischen Gehäusebohrung und Ventilkolben deutlich größer als der Führungs- und Leckagespalt zwischen Kolbenbohrung und Ventilkolben. Dadurch wird der Ventilkolben vorzugsweise ausschließlich durch die Kolbenbohrung des Kopplerkolbens geführt, und es kommt zu keiner Berührung und damit auch zu keiner Querkrafteinleitung zwischen Ventilkolben und Kopplergehäuse.

In weiteren vorteilhaften Ausführungen sind die Gehäusebohrung und die Kolbenbohrung zylindrisch ausgeführt und der Ventilkolben ist auf Höhe der Gehäusebohrung verjüngt, so dass die Durchmesserdifferenz zwischen Ventilkolben und Gehäusebohrung im Bereich dieser Gehäusebohrung größer ist als das Führungsspiel zwischen Ventilkolben und Kolbenbohrung, vorzugsweise um mindestens 5 µm größer. Auch dadurch wird der Ventilkolben ausschließlich durch die Kolbenbohrung des Kopplerkolbens geführt und es kommt zu keiner Berührung und damit auch zu keiner Querkrafteinleitung zwischen Ventilkolben und Kopplergehäuse.

In vorteilhaften Weiterbildungen ist der Kopplerkolben mittels einer Federhülse gegen das Aktorelement vorgespannt. Dadurch ist ein ständiger Kontakt zwischen Kopplerkolben und Aktorelement gewährleistet und der Aktor erfährt keinerlei Zugbelastungen. Vorzugsweise ist dabei die Federhülse den Kopplerkolben und das Kopplergehäuse radial umgebend angeordnet. Dadurch ist die Federhülse bauraumsparend angeordnet.

In vorteilhaften Ausführungen ist die Kopplereinheit Bestandteil eines Kraftstoffinjektors für Brennkraftmaschinen zur Einspritzung von Kraftstoff unter hohem Druck, wobei der Kraftstoffinjektor weiterhin ein Steuerventil aufweist. Die Kopplereinheit überträgt in dieser Ausführung die Bewegung des Aktorelements auf den Ventilbolzen, welcher Bestandteil des Steuerventils ist. Dadurch kann das Steuerventil sehr schnelle Öffnungs- und Schließbewegungen ausführen und die Einspritzcharakteristik des Kraftstoffinjektors besonders vorteilhaft und genau ausgeführt werden, speziell durch diverse Vor- und Nacheinspritzungen.

In vorteilhaften Ausführungen ist in dem Kraftstoffinjektor ein Hochdruckraum ausgebildet, in dem eine Düsennadel längsverschiebbar angeordnet ist, wobei die Düsennadel durch ihre Längsbewegung mit einem Düsennadelsitz zusammenwirkt und dadurch wenigstens eine Einspritzöffnung öffnet und schließt. Die Düsennadel erfährt durch den Druck im Hochdruckraum eine vom Düsennadelsitz weg gerichtete Öffnungskraft und sie erfährt durch den Druck in einem Steuerraum eine in Richtung des Düsennadelsitzes gerichtete Schließkraft. Bei gleichem Druck im Hochdruckraum und im Steuerraum übersteigt die Schließkraft die Öffnungskraft und die Düsennadel bleibt im Düsennadelsitz fixiert und verschließt die wenigstens eine Einspritzöffnung. Der Druck im Steuerraum ist durch das Steuerventil einstellbar bzw. steuerbar. Das Steuerventil ist durch den Ventilkolben ansteuerbar. Die Düsennadel wird dadurch mittelbar durch das Aktorelement angesteuert, wobei das Aktorelement vergleichsweise klein ausgeführt werden kann, da es nicht die Düsennadel direkt ansteuert, was eine sehr große Aktorkraft in Verbindung mit einem sehr hohen Aktorhub erfordern würde. Stattdessen steuert das Aktorelement mit vergleichsweise geringer Aktorkraft und geringem Aktorhub über die hydraulische Kopplereinheit das Steuerventil an.

Vorteilhafterweise umfasst das Steuerventil einen an einer Ventilplatte ausgebildeten Ventilsitz und den Ventilbolzen. Der Ventilkolben wirkt mit dem Ventilbolzen, und der Ventilbolzen mit dem Ventilsitz zusammen. Die Kraft des Aktorelements wird somit über die Kopplereinheit in den Ventilbolzen eingeleitet, der wiederum mit dem Ventilsitz zusammenwirkt und die Einspritzcharakteristik des Kraftstoffinjektors steuert.

In vorteilhaften Ausführungen ist der Ventilkolben durch eine Ventilkolbenfeder gegen den Ventilbolzen verspannt. Dadurch ist ein ständiger Kontakt zwischen Ventilkolben und Ventilbolzen gewährleistet; es kommt zu keinen Abweichungen der Einspritzmenge auf Grund eines nennenswerten Abstands zwischen Ventilbolzen und Ventilkolben.

Vorteilhafterweise verspannt die Federhülse das Kopplergehäuse gegen die Ventilplatte. Die Ventilplatte ist ortsfest innerhalb des Kraftstoffinjektors angeordnet. Durch das Anpressen des Kopplergehäuses an die Ventilplatte ist also auch das Kopplergehäuse ortsfest innerhalb des Kraftstoffinjektors angeordnet. Somit stellt das Kopplergehäuse aus funktionaler Sicht einen Teil des Injektorgehäuses dar.

### Ausführungsbeispiele

Ausführungsbeispiele der Erfindung sind in den Zeichnungen dargestellt und in der nachfolgenden Beschreibung näher erläutert.

Es zeigen:
**Fig.1** eine Schnittdarstellung durch einen nicht erfindungsgemäßen Kraftstoffinjektor wobei nur die wesentlichen Bereiche dargestellt sind,
**Fig.2** eine Schnittdarstellung durch eine Kopplereinheit aus Figur 1 gemäß einem ersten Ausführungsbeispiel,
**Fig.3** eine schematische Darstellung eines Kraftstoffinjektors mit einem Steuerventil, das durch eine erfindungsgemäße Kopplereinheit ansteuerbar ist.

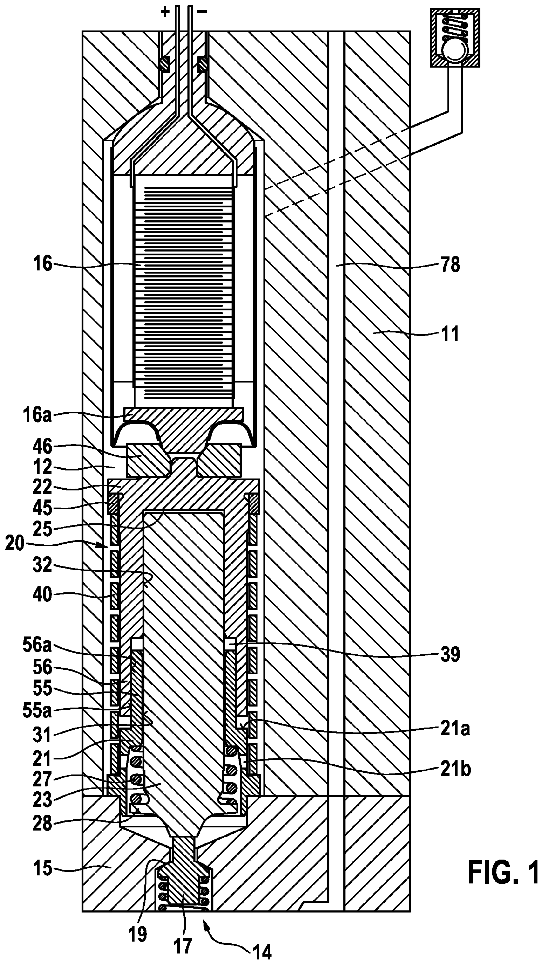

Der in **Fig.1** dargestellte Ausschnitt eines nicht erfindungsgemäßen Kraftstoffinjektors zeigt eine Kopplereinheit 20, welche innerhalb eines in einem Injektorgehäuse 11 ausgebildeten Niederdruckraums 12 angeordnet ist. Im Injektorgehäuse 11 ist weiterhin ein Aktorelement 16, im vorliegenden Ausführungsbeispiel ein piezoelektrisches Aktorelement 16 mit zwei elektrischen Anschlüssen, angeordnet. In alternativen Beispielen kann die Kopplereinheit 20 jedoch auch in einem anderen Gehäuse angeordnet sein, welches nicht Bestandteil eines Kraftstoffinjektors ist.

Der Niederdruckraum 12 ist von einer Ventilplatte 15 begrenzt, in welcher ein Steuerventil 14 mit einem Ventilbolzen 17 angeordnet ist. Die Ventilplatte 15 ist mit dem Injektorkörper 11 mittels einer nicht dargestellten Verschraubung hydraulisch dicht verbunden. Der Ventilbolzen 17 bildet mit einer Dichtfläche der Ventilplatte 15 einen Ventilsitz 19 aus. Durch eine Längsbewegung des Ventilbolzens 17 wird dieser vom Ventilsitz 19 weggedrückt, wodurch ein nicht dargestellter Steuerraum, dem eine nicht dargestellte Düsennadel mit einer Steuerfläche ausgesetzt ist, über eine ebenfalls nicht dargestellte Ablaufdrossel über den Niederdruckraum 12 mit einem Niederdruck-/Rücklaufsystem des Kraftstoffinjektors verbunden wird. Dadurch wird die Düsennadel von einem Düsennadelsitz abgehoben und Kraftstoff in den Brennraum einer Brennkraftmaschine eingespritzt. Das Steuerventil 14 steuert so die Einspritzcharakteristik des Kraftstoffinjektors in den Brennraum.

Die Kopplereinheit 20 umfasst ein hülsenförmiges Kopplergehäuse 21, einen topfförmigen Kopplerkolben 22 und einen zylindrischen Ventilkolben 23, wobei das Aktorelement 16 zumindest mittelbar mit dem Kopplerkolben 22 zusammenwirkt. In dem Kopplerkolben 22 ist eine Kolbenbohrung 32 als Sacklochbohrung ausgebildet, in der der Ventilkolben 23 längsbeweglich geführt ist. Zwischen dem Kopplerkolben 22 und dem Ventilkolben 23 ist in der Kolbenbohrung 32 ein Druckraum 25 angeordnet, welcher einen Arbeitsraum der Kopplereinheit 20 bildet. Im Betrieb ist der Druckraum 25 mit Kraftstoff gefüllt. Vorzugsweise ist der Druckraum 25 dabei durch das enge Spiel zwischen der Kolbenbohrung 32 und dem Ventilkolben 23 nahezu abgedichtet, so dass die hydraulische Kopplerfunktion der Kopplereinheit 20 sehr effizient ausgeführt ist.

In dem Kopplergehäuse 21 ist zumindest eine Ablaufbohrung 21b in radialer Richtung ausgebildet. Die Ablaufbohrung 21b verbindet bei geöffnetem Steuerventil 14 die Ablaufdrossel hydraulisch zumindest mittelbar mit dem Niederdruckraum 12.

Der Kopplerkolben 22 weist an seinem dem Kopplergehäuse 21 zugewandten Ende einen hülsenförmigen Fortsatz 56 auf, der in einer Ausführungsform verjüngt sein kann. Eine am Fortsatz 56 ausgebildete innere Führungsfläche 56a wird von einer Außenfläche des Kopplergehäuses 21 in axialer Richtung, also in Längsrichtung, geführt. Die Führungsfläche 56a des Kopplerkolbens 22 und die Außenfläche des Kopplergehäuses 21 bilden so eine Führung, die den Kopplerkolben 22 und damit auch die Baugruppe aus Kopplerkolben 22 und Ventilkolben 23 axial verschiebbar auf dem Kopplergehäuse 21 führt.

Im Bereich der Außenfläche kann das Kopplergehäuse 21 ebenfalls verjüngt sein und dort einen Fortsatz 55 ausbilden, der zur Führung des Kopplerkolbens 22 am oder im Kopplergehäuse 21 dient, wie in **Fig.1** gezeigt. Das Kopplergehäuses 21 weist dann an seinem dem Aktorelement 16 zugewandten Ende den hülsenförmigen Fortsatz 55 auf, der in einer Ausführungsform verjüngt sein kann. Eine am Fortsatz 55 ausgebildete äußere Führungsfläche 55a führt den Kopplerkolben 22 axial verschiebbar an einer Innenfläche 56a des Kopplerkolbens 22.

Am Ansatz des Fortsatzes 55 ist in vorteilhaften Ausführungen eine Anschlagfläche 21a an dem Kopplergehäuse 21 ausgebildet. Im nicht erfindungsgemäßen Beispiel der **Fig.1** ergibt sich die Anschlagfläche 21a aus dem stufenförmigen Übergang zum Fortsatz 55. Die Anschlagfläche 21a ist vorzugsweise als Ringfläche in axialer Richtung der Kopplereinheit 20 ausgebildet. Die Anschlagfläche 21a dient einem axialen Anschlag bzw. einem axialen Lager für den Kopplerkolben 22, der mit einer entsprechenden Stirnfläche mit dieser Anschlagfläche 21a zusammenwirken kann. In der **Fig.1** ist dies nur als Alternative schematisch gezeigt, da aufgrund der dargestellten Geometrien dieses Axiallager im Druckraum 25 ausgebildet ist, weil die Höhe des Druckraums 25 klein im Vergleich zum Abstand der beiden Bauteile an der Anschlagfläche 21a ist.

In einem nicht erfindungsgemäßen Beispiel kann der Fortsatz 55 des Kopplerkolbens 22 auch so gestaltet sein, dass er teilweise in das Kopplergehäuse 21 hineinragt und der Kopplerkolben 22 mit einer äußeren Führungsfläche des Fortsatzes 56 an einer Innenfläche des Kopplergehäuses 21 geführt ist. Bei dieser Ausführungsform können zudem die Führungen des Kopplerkolbens 22 im Kopplergehäuse 21 sowie des Ventilkolbens 23 im Kopplerkolben 22 axial zumindest teilweise auf gleicher Höhe angeordnet sein.

In einem weiteren nicht erfindungsgemäßen Beispiel kann der Fortsatz 55 des Kopplergehäuses 21 auch so gestaltet sein, dass der Fortsatz 56 des Kopplerkolbens 22 teilweise in das Kopplergehäuse 21 hineinragt und eine innere Führungsfläche 55a des Fortsatzes 55 den Kopplerkolben 22 an einer Außenfläche 56a des Kopplerkolbens 22 führt.

In dem Kopplergehäuse 21 ist unterhalb der Führung des Ventilkolbens 23 im Kopplerkolben 22 eine Gehäusebohrung 31 als Durchgangsbohrung ausgebildet, durch die der Ventilkolben 23 durchtritt bzw. durchragt. Der Spalt zwischen dem Ventilkolben-Außendurchmesser und dem Innendurchmesser der Gehäusebohrung 31 ist dabei so groß dimensioniert, dass es auch bei maximaler Verkippung des Ventilkolbens 23 innerhalb seiner Führungsbohrung 32 im Kopplerkolben 22 und gleichzeitig und gleichsinnig maximaler Verkippung des Kopplerkolbens 22 auf seiner Führung zum Kopplergehäuse 21 nie zu einem Kontakt zwischen Ventilkolben 23 und Kopplergehäuse 21 kommen kann. Vorzugsweise ist der Spalt zwischen dem Ventilkolben-Außendurchmesser und dem Innendurchmesser der Gehäusebohrung 31 um mindestens 5µm größer dimensioniert als der Führungsspalt zwischen dem Ventilkolben 23 und dem Kopplerkolben 22. Damit kann auch eine, z.B. auf Grund von Verspannungen bei der Montage entstandene Querkraft, die das Aktorelement 16 zumindest mittelbar auf den Kopplerkolben 22 ausübt, zu keinerlei am Ventilkolben 23 angreifenden Querkräften führen. Dadurch wird Verschleiß zwischen Kopplergehäuse 21 und Ventilkolben 23 verhindert, da es zu keinem mechanischen Kontakt kommt.

In dem nicht erfindungsgemäßen Beispiel der **Fig.1** ist zwischen dem Fortsatz 55 des Kopplergehäuses 21 und dem Kopplerkolben 22 ein Totraum 39 ausgebildet. Der Totraum 39 kann nicht erfindungsgemäß in unterschiedlichen Alternativen dabei funktionslos sein, eine Dämpfungsfunktion aufweisen, oder als Spiel für ein Axiallager mit einer Anschlagfläche analog zur Anschlagfläche 21a dienen. Je nach Dämpfungsfunktion ist der Totraum 39 dabei mehr oder weniger gedrosselt mit dem Niederdruckraum 12 verbunden, beispielsweise über die Ablaufbohrung 21b und das Spiel zwischen Gehäusebohrung 31 und Ventilkolben 23.

Die Kopplereinheit 20 radial umgebend ist eine Federhülse 40 angeordnet. Die Federhülse 40 stützt sich an entsprechend ausgebildeten Absätzen des Kopplergehäuses 21 und des Kopplerkolbens 22 zumindest mittelbar ab. Die Federhülse 40 verspannt das Kopplergehäuse 21 gegen die Ventilplatte 15 und den Kopplerkolben 22 gegen das Aktorelement 16.

Die Federhülse 40 drückt den Kopplerkolben 22 über eine Einstellscheibe 45 und einen Absatz des Kopplerkolbens 22 gegen ein Einstellstück 46, an welchem ein Übertragungselement 16a des Aktorelements 16 angreift. Die Federhülse 40 sorgt dadurch zum einen für eine Vorspannung des Kopplerkolbens 22 gegen das Aktorelement 16 und bewirkt zum anderen mittelbar über die Einstellscheibe 45 und das Einstellstück 46 die für eine Funktionsfähigkeit des Systems notwendige Vorspannung des Aktorelements 16. Weiterhin presst die Federhülse 40 über einen Absatz des Kopplergehäuses 21 das Kopplergehäuse 21 gegen die Ventilplatte 15, so dass Injektorkörper 11, Ventilplatte 15 und Kopplergehäuse 21 ortsfest angeordnet sind.

An dem unteren Abschnitt des Kopplergehäuses 21 ist eine Ventilkolbenfeder 27 angeordnet, die zwischen dem Kopplergehäuse 21 und einem auf dem Ventilkolben 23 fixierten Federteller 28 verspannt ist. Durch die Ventilkolbenfeder 27 wird der Ventilkolben 23 auf den Ventilbolzen 17 des Steuerventils 14 gedrückt. In einem weiteren nicht erfindungsgemäßen Beispiel können der Ventilkolben 23 und der Federteller 28 auch einstückig ausgeführt sein.

Der Führungsspalt zwischen dem Kopplerkolben 22 und der Führungsfläche 55a am Kopplergehäuse 21 ist nicht erfindungsgemäß vergleichsweise gering dimensioniert, um eine Verkippung der Baugruppe aus Kopplerkolben 22 und Ventilkolben 23 gegenüber dem Kopplergehäuse 21 möglichst gering zu halten.

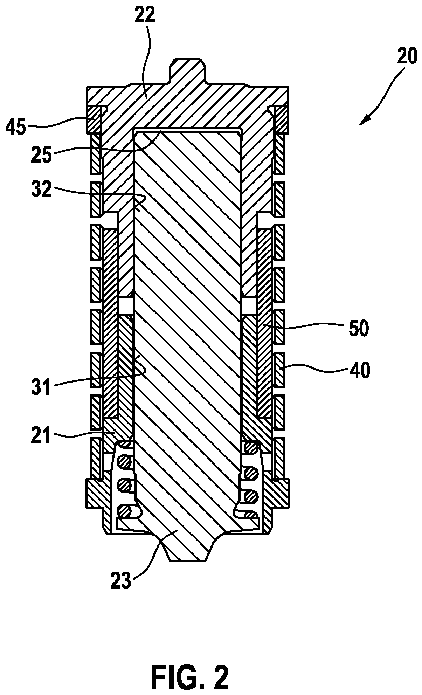

**Fig.2** zeigt ein erstes Ausführungsbeispiel der erfindungsgemäßen Kopplereinheit 20. In dieser Ausführung ist eine Führungshülse 50 das Kopplergehäuse 21 und den Kopplerkolben 22 zumindest teilweise radial umgebend angeordnet. Die Führungshülse 50 ist dabei so angeordnet und dimensioniert, dass sie das Kopplergehäuse 21 und den Kopplerkolben 22 im Rahmen der Toleranzen koaxial zueinander positioniert. Bei der Anordnung der Führungshülse 50 sind fünf Varianten möglich:
- Nicht erfindungsgemäß: Fügen der Führungshülse 50 auf einem Außendurchmesser bzw. einer Außenfläche des Kopplerkolbens 22 und Dimensionierung einer engen Führung zwischen der Führungshülse 50 und dem Kopplergehäuse 21, so dass die Führungshülse 50 und mit ihr auch der Kopplerkolben 22 von dem Kopplergehäuse 21 axial geführt werden.
- Nicht erfindungsgemäß: Fügen der Führungshülse 50 auf einem Außendurchmesser bzw. einer Außenfläche des Kopplergehäuses 21 und Dimensionierung einer engen Führung zwischen der Führungshülse 50 und dem Kopplerkolben 22, so dass der Kopplerkolben 22 von der Führungshülse 50, und damit auch mittelbar von dem Kopplergehäuse 21, axial geführt wird.
- Nicht erfindungsgemäß: Fügen der Führungshülse 50 in einem Innendurchmesser bzw. einer Innenfläche des Kopplerkolbens 22 und Dimensionierung einer engen Führung zwischen der Führungshülse 50 und dem Kopplergehäuse 21, so dass die Führungshülse 50 und mit ihr auch der Kopplerkolben 22 von dem Kopplergehäuse 21 axial geführt werden.
- Nicht erfindungsgemäß: Fügen der Führungshülse 50 in einem Innendurchmesser bzw. einer Innenfläche des Kopplergehäuses 21 und Dimensionierung einer engen Führung zwischen der Führungshülse 50 und dem Kopplerkolben 22, so dass der Kopplerkolben 22 von der Führungshülse 50, und damit auch mittelbar von dem Kopplergehäuse 21, axial geführt wird.
- Erfindungsgemäß ist die Führungshülse 50 weder mit dem Kopplerkolben 22 noch mit dem Kopplergehäuse 21 gefügt, sondern sowohl zum Kopplerkolben 22 als auch zum Kopplergehäuse 21 mit geringem Spiel geführt. Auf diese Weise werden der Kopplerkolben 22 und das Kopplergehäuse 21 über die Führungshülse 50 mittelbar zueinander geführt bzw. radial zueinander positioniert.

Das Führen der Führungshülse 50 kann dabei in unterschiedlichen Ausführungsformen auf Fortsätzen 55, 56 des Kopplergehäuses 21 und/oder des Kopplerkolbens 22 erfolgen. Die Ausbildung solcher Fortsätze 55, 56 wurde schon in **Figur 1** beschrieben und ist auch in der **Fig.2** dargestellt.

Die längsbewegliche Führung des Kopplerkolbens 22 auf oder im Kopplergehäuse 21 kann in allen Ausführungsformen wie in der Zeichnung dargestellt rotationssymmetrisch auf dem gesamten Umfang erfolgen. Sie kann aber auch in allen Ausführungsbeispielen in Umfangsrichtung ein- oder mehrfach unterbrochen ausgeführt sein, da diese Führung im Gegensatz zur Führung zwischen Ventilkolben 23 und Kopplerkolben 22 keine Dichtfunktion zu erfüllen hat.

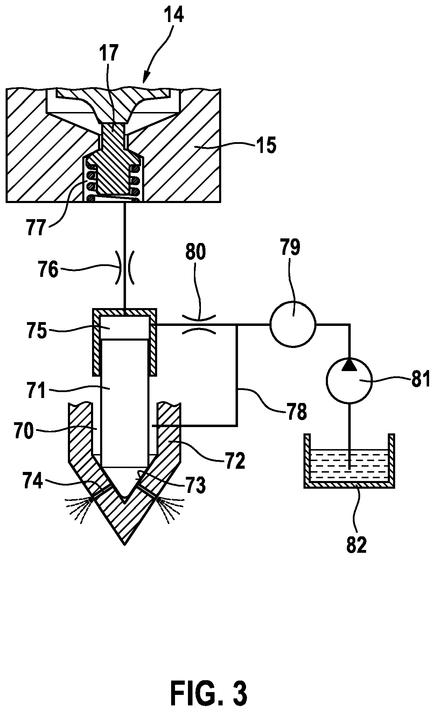

**Fig.3** zeigt eine schematische Darstellung eines Kraftstoffinjektors mit dem Steuerventil 14, das durch die erfindungsgemäße Kopplereinheit 20 ansteuerbar ist.

In dem Kraftstoffinjektor ist ein Hochdruckraum 70 ausgebildet, in welchem eine Düsennadel 71 längsverschiebbar angeordnet ist. Die Düsennadel 71 wirkt durch ihre Längsbewegung mit einem an einem Düsenkörper 72 angeordneten Düsennadelsitz 73 zusammen und öffnet und schließt dadurch wenigstens eine im Düsenkörper 72 ausgebildete Einspritzöffnung 74, welche in einen nicht dargestellten Brennraum einer Brennkraftmaschine mündet.

Die Düsennadel 71 erfährt durch den Druck in dem Hochdruckraum 70 eine von dem Düsensitz 73 weg weisende Öffnungskraft und sie erfährt durch den Druck in einem Steuerraum 75 eine in Richtung des Düsennadelsitzes 73 gerichtete Schließkraft. Bei gleichem Druck im Hochdruckraum 70 und im Steuerraum 75 überwiegt die Schließkraft die Öffnungskraft, die Düsennadel 71 ist im Düsensitz 73 fixiert und verschließt die mindestens eine Einspritzöffnung 74. Der Druck im Steuerraum 75 ist durch das Steuerventil 14 einstellbar. Das Steuerventil 14 wird durch den Ventilkolben 23 der Kopplereinheit 20 angesteuert.

Der Steuerraum 75, dem die Düsennadel 71 mit einer Steuerfläche ausgesetzt ist, ist über eine Ablaufdrossel 76 mit einem Ventilraum 77 hydraulisch verbunden. In dem Ventilraum 77 ist der Ventilbolzen 17 zumindest teilweise angeordnet. Der Ventilbolzen 17 öffnet und schließt eine Verbindung des Ventilraums 77 zum Niederdruckraum 12, welcher mit einem Niederdruck-/Rücklaufsystem des Kraftstoffinjektors verbunden ist.

Der Hochdruckraum 70 wird von einem Rail 79 über einen Hochdruckkanal 78 mit unter Hochdruck stehendem Kraftstoff versorgt. Das Rail 79 versorgt weiterhin den Steuerraum 75 über eine Zulaufdrossel 80 mit unter Hochdruck stehendem Kraftstoff, wobei bei geöffnetem Steuerventil 14 aus dem Steuerraum 75 über die Ablaufdrossel 76 mehr Kraftstoff abströmt als über die Zulaufdrossel 80 zuströmt. Eine Hochdruckpumpe 81 entnimmt Kraftstoff aus einem Speicher 82, verdichtet den Kraftstoff und führt ihn dem Rail 79 zu.

Die Funktionsweise der erfindungsgemäßen Kopplereinheit 20 ist wie folgt:

Bei Betätigung des Aktorelements 16 wird der Kopplerkolben 22 über das Einstellstück 45 und entgegen der Vorspannkraft der Federhülse 40 translatorisch in Richtung des Ventilbolzens 17 bewegt. Diese Bewegung wird durch den im Druckraum 25 befindlichen Kraftstoff auf das kopplereinheitseitige Ende des Ventilkolbens 17 hydraulisch übertragen, wobei die axiale Bewegung des Kopplerkolbens 22 entsprechend eines Durchmesserverhältnisses -1:1 von Ventilkolben 23 und Kolbenbohrung 32 in eine axiale Bewegung des Ventilkolbens 23 übersetzt wird. Die durch das Aktorelement 16 zur Verfügung gestellte Kraft wird dementsprechend durch die Kopplereinheit 20 hydraulisch auf den Ventilbolzen 17 des Steuerventils 14 übertragen.

Der Kopplerkolben 22 ist dabei mit vergleichsweise geringem Spiel koaxial zum Kopplergehäuse 21 geführt. Wird eine Querkraft vom Aktorelement 16 über das Einstellstück 46 in den Kopplerkolben 22 eingeleitet, so wird diese Querkraft aufgrund der engen Führung zwischen Kopplerkolben 22 und Kopplergehäuse 21 in das Kopplergehäuse 21 übertragen und wird durch Querkräfte, die vom Kopplergehäuse 21 auf den Kopplerkolben 22 wirken, kompensiert. Die axiale Bewegung des Ventilkolbens 23 wird somit nicht durch die Querkräfte beeinflusst. Damit ist zum einen der Verschleiß am Kopplergehäuse 21 und vor allem am Ventilkolben 23 minimiert und zum anderen wirkt die Federkraft der Ventilkolbenfeder 27 ohne Minderung durch Reibkräfte vollständig auf den Ventilkolben 23, so dass eine ausreichende Vorspannung zwischen Ventilkolben 23 und Ventilbolzen 17 sowie eine ausreichende Befüllung des Druckraums 25 sichergestellt sind.

## Patentansprüche

1. Hydraulische Kopplereinheit (20) zur Steuerung eines Ventils, insbesondere eines Steuerventils (14) eines Kraftstoffinjektors, wobei die Kopplereinheit (20) einen längsbeweglichen Kopplerkolben (22), einen längsbeweglichen Ventilkolben (23) und ein Kopplergehäuse (21) umfasst und eine Bewegung eines Aktorelements (16), insbesondere eines piezoelektrischen Aktorelements, auf einen Ventilbolzen (17) überträgt, wobei in dem Kopplergehäuse (21) eine Gehäusebohrung (31) ausgebildet ist, durch die der Ventilkolben (23) ragt, wobei zwischen dem Kopplerkolben (22) und dem Ventilkolben (23) ein Druckraum (25) ausgebildet ist, wobei der Druckraum (25) mit Kraftstoff befüllbar ist, wobei in dem Kopplerkolben (22) eine Kolbenbohrung (32) ausgebildet ist, in der der Ventilkolben (23) längsbeweglich geführt ist, und wobei der Kopplerkolben (22 am Kopplergehäuse (21) längsbeweglich geführt ist, wobei die Führung zwischen Kopplerkolben (22) und Kopplergehäuse (21) eine Führungshülse (50) umfasst, **dadurch gekennzeichnet, dass** die Führungshülse (50) das Kopplergehäuse (21) und den Kopplerkolben (22) zumindest teilweise radial umgebend angeordnet ist, wobei die Führungshülse (50) am Kopplergehäuse (21) längsbeweglich geführt ist und wobei der Kopplerkolben (22) in der Führungshülse (50) längsbeweglich geführt ist.

2. Kopplereinheit (20) nach Anspruch 1, **dadurch gekennzeichnet, dass** der Kopplerkolben (22) einen verjüngten Endbereich aufweist und dass die längsbewegliche Führung des Kopplerkolbens (22) an der Führungshülse (5) an dem Endbereich ausgebildet ist.

3. Kopplereinheit (20) nach einem der Ansprüche 1 oder 2, **dadurch gekennzeichnet, dass** das Kopplergehäuse (21) einen verjüngten Endbereich aufweist und dass die längsbewegliche Führung der Führungshülse (50) an dem Kopplergehäuse (21) an dem Endbereich ausgebildet ist.

4. Kopplereinheit (20) nach einem der vorhergehenden Ansprüche, **dadurch gekennzeichnet, dass** die Kolbenbohrung (32) als Sacklochbohrung ausgebildet ist.

5. Kopplereinheit (20) nach einem der vorgehenden Ansprüche, **dadurch gekennzeichnet, dass** die Gehäusebohrung (31) und die Kolbenbohrung (32) zylindrisch ausgeführt sind und dass zwischen Gehäusebohrung (31) und Ventilkolben (23) ein größeres Durchmesserspiel vorgesehen ist als zwischen Kolbenbohrung (32) und Ventilkolben (23), vorzugsweise ein um mindestens 5 µm größeres Durchmesserspiel.

6. Kopplereinheit (20) nach einem der vorhergehenden Ansprüche, **dadurch gekennzeichnet, dass** bei maximaler Verkippung des Ventilkolbens (23) in der Kolbenbohrung (32) und gleichzeitiger und gleichsinniger maximaler Verkippung des Kopplerkolbens (22) gegenüber dem Kopplergehäuse (21) der Ventilkolben (23) und das Kopplergehäuse (21) einander nicht berühren.

7. Kopplereinheit (20) nach einem der vorhergehenden Ansprüche, **dadurch gekennzeichnet, dass** der Kopplerkolben (22) mittels einer Federhülse (40) gegen das Aktorelement (16) vorgespannt ist, wobei vorzugsweise die Federhülse (40) den Kopplerkolben (22) und das Kopplergehäuse (21) radial umgebend angeordnet ist.

8. Kraftstoffinjektor für Brennkraftmaschinen zur Einspritzung von Kraftstoff unter hohem Druck mit einem Steuerventil (14) und einer Kopplereinheit (20) nach einem der vorhergehenden Ansprüche, wobei in dem Kraftstoffinjektor ein Hochdruckraum (70) ausgebildet ist, in dem eine Düsennadel (71) längsverschiebbar angeordnet ist, wobei die Düsennadel (71) durch ihre Längsbewegung mit einem Düsennadelsitz (73) zusammenwirkt und dadurch wenigstens eine Einspritzöffnung (74) öffnet und schließt, wobei die Düsennadel (71) durch den Druck in einem Steuerraum (75) eine in Richtung des Düsennadelsitzes (73) gerichtete Schließkraft erfährt, wobei der Druck im Steuerraum (75) durch das Steuerventil (14) einstellbar ist, wobei das Steuerventil (14) durch den Ventilkolben (23) ansteuerbar ist.

9. Kraftstoffinjektor nach Anspruch 8 **dadurch gekennzeichnet, dass** das Steuerventil (14) einen an einer Ventilplatte (15) ausgebildeten Ventilsitz (19) und den Ventilbolzen (17) umfasst, wobei der Ventilbolzen (17) mit dem Ventilsitz (19) zusammenwirkt, und dass der Ventilkolben (23) mit dem Ventilbolzen (17) zusammenwirkt, wobei vorzugsweise der Ventilkolben (23) durch eine Ventilkolbenfeder (27) gegen den Ventilbolzen (17) verspannt ist.

## Claims

1. Hydraulic coupler unit (20) for the control of a valve, in particular of a control valve (14) of a fuel injector, wherein the coupler unit (20) comprises a longitudinally movable coupler piston (22), a longitudinally movable valve piston (23) and a coupler housing (21) and transmits a movement of an actuator element (16), in particular of a piezoelectric actuator element, to a valve pin (17), wherein, in the coupler housing (21), there is formed a housing bore (31) through which the valve piston (23) projects, wherein a pressure space (25) is formed between the coupler piston (22) and the valve piston (23), wherein the pressure space (25) can be filled with fuel, wherein, in the coupler piston (22), there is formed a piston bore (32) in which the valve piston (23) is guided in longitudinally movable fashion, and wherein the coupler piston (22) is guided in longitudinally movable fashion on the coupler housing (21), wherein the guide between coupler piston (22) and coupler housing (21) comprises a guide sleeve (50), **characterized in that** the guide sleeve (50) is arranged so as to at least partially radially surround the coupler housing (21) and the coupler piston (22), wherein the guide sleeve (50) is guided in longitudinally movable fashion on the coupler housing (21), and wherein the coupler piston (22) is guided in longitudinally movable fashion in the guide sleeve (50).

2. Coupler unit (20) according to Claim 1, **characterized in that** the coupler piston (22) has a narrowed end region, and **in that** the longitudinally movable guide of the coupler piston (22) on the guide sleeve (50) is formed at the end region.

3. Coupler unit (20) according to either of Claims 1 and 2, **characterized in that** the coupler housing (21) has a narrowed end region, and **in that** the longitudinally movable guide of the guide sleeve (50) on the coupler housing (21) is formed at the end region.

4. Coupler unit (20) according to any of the preceding claims, **characterized in that** the piston bore (32) is formed as a blind bore.

5. Coupler unit (20) according to any of the preceding claims, **characterized in that** the housing bore (31) and the piston bore (32) are of cylindrical design, and **in that** a greater diameter clearance, preferably a diameter clearance greater by at least 5 µm, is provided between housing bore (31) and valve piston (23) than between piston bore (32) and valve piston (23).

6. Coupler unit (20) according to any of the preceding claims, **characterized in that**, in the case of maximum tilting of the valve piston (23) in the piston bore (32) and simultaneous maximum tilting of the coupler piston (22) relative to the coupler housing (21) in the same direction, the valve piston (23) and the coupler housing (21) do not make contact with one another.

7. Coupler unit (20) according to any of the preceding claims, **characterized in that** the coupler piston (22) is preloaded against the actuator element (16) by means of a spring sleeve (40), wherein preferably, the spring sleeve (40) is arranged so as to radially surround the coupler piston (22) and the coupler housing (21).

8. Fuel injector for internal combustion engines for injecting fuel at high pressure, having a control valve (14) and having a coupler unit (20) according to any of the preceding claims, wherein, in the fuel injector, there is formed a high-pressure space (70) in which a nozzle needle (71) is arranged in longitudinally displaceable fashion, wherein the nozzle needle (71), by means of its longitudinal movement, interacts with a nozzle needle seat (73) and thus opens and closes at least one injection opening (74), wherein the nozzle needle (71) is subjected by the pressure in a control space (75) to a closing force directed in the direction of the nozzle needle seat (73), wherein the pressure in the control space (75) is adjustable by means of the control valve (14), wherein the control valve (14) is actuatable by means of the valve piston (23).

9. Fuel injector according to Claim 8, **characterized in that** the control valve (14) comprises a valve seat (19) formed on a valve plate (15) and comprises the valve pin (17), wherein the valve pin (17) interacts with the valve seat (19), and **in that** the valve piston (23) interacts with the valve pin (17), wherein preferably, the valve piston (23) is braced against the valve pin (17) by a valve piston spring (27).

## Revendications

1. Unité de coupleur hydraulique (20) destinée à commander une soupape, en particulier une soupape de commande (14) d'un injecteur de carburant, dans laquelle l'unité de coupleur (20) comprend un piston de coupleur mobile longitudinalement (22), un piston de soupape mobile longitudinalement (23) et un boîtier de coupleur (21) et transmet un mouvement d'un élément d'actionneur (16), en particulier d'un élément d'actionneur piézoélectrique, à un axe de soupape (17), dans laquelle un alésage de boîtier (31) à travers lequel passe le piston de soupape (23) est formé dans le boîtier de coupleur (21), dans laquelle une chambre de pression (25) est formée entre le piston de coupleur (22) et le piston de soupape (23), dans laquelle la chambre de pression (25) peut être remplie de carburant, dans laquelle un alésage de piston (32), dans lequel le piston de soupape (23) est guidé en mouvement longitudinal, est formé dans le piston de coupleur (22), et dans laquelle le piston de coupleur (22) est guidé en mouvement longitudinal sur le boîtier de coupleur (21), dans laquelle le guidage entre le piston de coupleur (22) et le boîtier de coupleur (21) comprend une douille de guidage (50), **caractérisée en ce que** la douille de guidage (50) est disposée de façon à entourer radialement au moins en partie le boîtier de coupleur (21) et le piston de coupleur (22), dans laquelle la douille de guidage (50) est guidée en mouvement longitudinal sur le boîtier de coupleur (21) et dans laquelle le piston de coupleur (22) est guidé en mouvement longitudinal dans la douille de guidage (50).

2. Unité de coupleur (20) selon la revendication 1, **caractérisée en ce que** le piston de coupleur (22) présente une région d'extrémité amincie et **en ce que** le guidage en mouvement longitudinal du piston de coupleur (22) sur la douille de guidage (50) est réalisé sur la région d'extrémité.

3. Unité de coupleur (20) selon une des revendications 1 ou 2, **caractérisée en ce que** le boîtier de coupleur (21) présente une région d'extrémité amincie et **en ce que** le guidage en mouvement longitudinal de la douille de guidage (50) sur le boîtier de coupleur (21) est réalisé sur la région d'extrémité.

4. Unité de coupleur (20) selon l'une quelconque des revendications précédentes, **caractérisée en ce que** l'alésage de piston (32) est constitué par un alésage de trou borgne.

5. Unité de coupleur (20) selon l'une quelconque des revendications précédentes, **caractérisée en ce que** l'alésage de boîtier (31) et l'alésage de piston (32) sont cylindriques et **en ce qu'**il est prévu entre l'alésage de boîtier (31) et le piston de soupape (23) un plus grand jeu diamétral qu'entre l'alésage de piston (32) et le piston de soupape (23), de préférence un jeu diamétral plus grand d'au moins 5 µm.

6. Unité de coupleur (20) selon l'une quelconque des revendications précédentes, **caractérisée en ce qu'**avec une inclinaison maximale du piston de soupape (23) dans l'alésage de piston (32) et une inclinaison maximale simultanée et de même sens du piston de coupleur (22) par rapport au boîtier de coupleur (21) le piston de soupape (23) et le boîtier de coupleur (21) ne se touchent pas.

7. Unité de coupleur (20) selon l'une quelconque des revendications précédentes, **caractérisée en ce que** le piston de coupleur (22) est précontraint contre l'élément d'actionneur (16) au moyen d'une gaine à ressort (40), dans laquelle la gaine à ressort (40) est disposée de préférence de façon à entourer radialement le piston de coupleur (22) et le boîtier de coupleur (21).

8. Injecteur de carburant pour des moteurs à combustion interne destiné à l'injection de carburant sous haute pression avec une soupape de commande (14) et une unité de coupleur (20) selon l'une quelconque des revendications précédentes, dans lequel une chambre à haute pression (70) est formée dans l'injecteur de carburant, dans laquelle est disposé un pointeau (71) mobile longitudinalement, dans lequel le pointeau (71) coopère par son mouvement longitudinal avec un siège de pointeau (73) et ainsi ouvre et ferme au moins un orifice d'injection (74), dans lequel le pointeau (71) subit sous la pression dans une chambre de commande (75) une force de fermeture orientée en direction du siège de pointeau (73), dans lequel la pression dans la chambre de commande (75) peut être réglée par la soupape de commande (14), dans lequel la soupape de commande (14) peut être commandée par le piston de soupape (23).

9. Injecteur de carburant selon la revendication 8, **caractérisé en ce que** la soupape de commande (14) comprend un siège de soupape (19) formé sur une plaque de soupape (15) ainsi que l'axe de soupape (17), dans lequel l'axe de soupape (17) coopère avec le siège de soupape (19) et **en ce que** le piston de soupape (23) coopère avec l'axe de soupape (17), dans lequel le piston de soupape (23) est de préférence précontraint contre l'axe de soupape (17) par un ressort de piston de soupape (27).
